# EUROPEAN PATENT APPLICATION

(11) **EP 3 670 318 A1**
(43) Date of publication of application: **24.06.2020**
(21) Application number: 19217090.0
(22) Date of filing: 17.12.2019
(51) Int. Cl.: B63B 25/28, B63B 35/00, F16L 3/24

(54) **DEVICE FOR SUPPORTING AN ELONGATE OBJECT ON A VESSEL DECK**

(30) Priority: 20.12.2018 BE 201805921
(71) Applicant: DEME Offshore BE N.V., 2070 Zwijndrecht (BE)
(72) Inventor: RABAUT, Dieter Wim Jan, 9000 Gent (BE); VANNIEUWENHUYSE, Kenneth Gerard, 9040 Sint-Amandsberg (BE); MICHIELSEN, Jan Maria Koen, 2000 Antwerpen (BE)
(74) Representative: Brouwer, Hendrik Rogier

(57) **Abstract**

Described is a device for supporting an elongate object in lying position on a deck of a vessel. The device comprises a support structure in which the object can be received in lying position and displacing means for displacing the support structure in a plane running parallel to the deck. The displacing means comprise a rail guide which is connected to the deck and over which sliding shoes of the support structure can slide in a sliding direction. The sliding shoe parts extend on either side of the rail guide and each sliding shoe part is connected with interposing of a hydraulic and/or pneumatic connection to the support structure in a direction running perpendicularly of the sliding direction. With the device elongate objects can be moved within reach of a lifting means.

## Description

### TECHNICAL FIELD OF THE INVENTION

The invention relates to a device for supporting an elongate object, for instance a hollow tubular object, on a deck of a vessel. The invention also relates to a device for upending an elongate object on a deck of a vessel using a lifting means. The invention further relates to a method for supporting an elongate object in lying position on a deck of a vessel, and for upending an elongate object from a deck of a vessel using a lifting means, and for moving within reach of a lifting means provided on the deck of a vessel an object to be lifted by the lifting means. The reach of the lifting means is bounded by a minimum and a maximum distance or radius, calculated from a rotation point of the lifting means.

The invention will be elucidated hereinbelow in the light of the offshore placing of a wind turbine. The reference to a wind turbine does not imply that the invention is limited to the use in the context of such a wind turbine. The device and method can in principle be applied to any elongate object which has to be supported on a deck of a vessel, optionally has to be transported over sea in lying position, and, once on site, has to be upended.

### BACKGROUND OF THE INVENTION

An offshore wind turbine is generally placed on a support structure which is anchored to the seabed. The support structure bridges the distance from the seabed to a position above the water surface and can be embodied in different ways. The support structure can thus comprise a single pile (a monopile) or be embodied as a lattice structure, also referred to as jacket. The support structure can be anchored to the seabed, for instance by means of arranging a suitable foundation in the seabed.

For reasons of efficiency it is important to be able to transport as many monopiles as possible with one vessel to an offshore location where the monopiles must be upended and lowered into the water. Monopiles are however hollow tubular structures with a considerable length, and the space on a vessel is limited.

In order to be able to transport monopiles in lying position in orderly manner the deck of a vessel can be provided with a device which comprises a number of elongate support structures running parallel to each other. Each support structure is provided with a carrying surface which has roughly the same shape as a peripheral wall part of the monopile and supports the peripheral part when the monopile is received in the support structure. Each monopile, or each elongate object in general, is here fixed with known means to the support structure.

It is important to not only be able to transport the greatest number of objects possible on the deck of a vessel, but also, once on site, to perform the upending of objects for moving them in the direction of the seabed as efficiently as possible, which usually amounts to performing the work in the shortest possible time span. The efficiency of the work is however limited by an existing trend for the dimensions of elongate objects, such as monopiles, to be placed at sea to keep increasing. The greater dimensions of the objects necessitate the use of larger lifting means with an increased range of operation. This is understood to mean both the maximum load to be lifted and the reach of the lifting means. The greater dimensions of the lifting means and the objects are difficult to reconcile with the limited space available on a vessel.

### SUMMARY OF THE INVENTION

The present invention has for its object to provide a device for supporting an elongate object on a deck of a vessel, and for upending an elongate object from a deck of a vessel using a lifting means, wherein the above stated drawbacks of the prior art are at least partially obviated.

According to the invention, this object is achieved by providing a device according to claim 1. Particularly provided is a device for supporting an elongate object on a deck of a vessel, comprising:
- a support structure in which the object can be received in lying position; and
- displacing means configured to displace the support structure in a plane running parallel to the deck;
wherein the displacing means comprise a rail guide which is connected to the deck and over which sliding shoes of the support structure slide in a sliding direction, wherein sliding shoe parts extend on either side of the rail guide and wherein each sliding shoe part is connected with interposing of a hydraulic and/or pneumatic connection to the support structure in a direction running perpendicularly of the sliding direction, in a plane running parallel to the work deck.

A number of advantages is achieved in this way. The displacing means, which are configured to displace objects received in a number of support structures collectively relative to the deck and parallel to the deck in the lying position, for instance make it possible to move an object within reach of a lifting means, which can then take up and upend the object and carry it to an end position. For a monopile, this is for instance a foundation anchored to the seabed. It can also be useful to displace an object relative to other objects present in the support structures in order to free up space for another object in the support structure. The displacement relative to the lifting means can comprise a displacement toward the position of the lifting means or away from the position of the lifting means. In this way an object can be moved within reach of the lifting means. The boom of a lifting crane can indeed be rotated through determined angles so that a circular area can be covered in a horizontal plane. This circular area is bounded by a minimum radius, wherein the boom of the lifting means can be luffed in maximally as allowed by the design of the lifting means, and a maximum radius wherein the boom of the lifting means can be lowered (luffed out) maximally as allowed by its design and a load to be lifted.

Providing a rail guide wherein sliding shoe parts extend on either side of the rail guide and wherein each sliding shoe part is connected with interposing of a hydraulic and/or pneumatic connection to the support structure in a direction running perpendicularly of the sliding direction achieves that a relatively heavy structure, such as the support structure, in which the object can be received in lying position can be moved over the deck of the vessel with relative ease. When moving support structures, but for instance also when upending an elongate object using a lifting means, relatively great forces are released, which deform components of the vessel, such as the deck. Without application of the claimed invention the displacing of support structures would be impeded by such deformations and for instance become stuck after a small displacement. Such a situation is undesirable, among other reasons because it is often very difficult to get a support structure which is stuck loose again. This delay is particularly costly.

For the sake of operational reliability an embodiment of the invention wherein the connection between a sliding shoe and the support structure comprises a hydraulic connection is preferred.

It is noted that the rail guides are not limited to widths which might be associated with rail guides as known in railways. The rail guides of the present invention can have a relatively great width. A running surface (or sliding surface) of the bull rail guide can thus for instance have a width of more than 1 m.

A suitable embodiment of the device according to the invention has the feature that the preferably hydraulic connection between a sliding shoe and the support structure comprises a piston cylinder which is connected on a side to the support structure and on another side to the sliding shoe parts of the sliding shoe.

In an improved embodiment of the device according to the invention the connection between a sliding shoe and the support structure comprises two piston cylinders, a first of which is connected on a side to the support structure and on another side to a first sliding shoe part of the sliding shoe, and the second of which is connected on a side to the support structure and on another side to a second sliding shoe part of the sliding shoe, which second sliding shoe part is located on a different side of the rail guide than the first sliding shoe part.

The hydraulic and/or pneumatic connection forms part of respectively a hydraulic and/or pneumatic circuit. According to an embodiment of the device, the hydraulic and/or pneumatic connection is incorporated in a hydraulic and/or pneumatic circuit, which is configured such that it can have a sliding shoe co-displace with the rail guide under counter-pressure. This can for instance be the case if the rail guide is deformed at positions by forces acting on the vessel, and/or if a support structure is not properly aligned relative to the rail guide, and/or for another reason necessitating a co-displacement of the sliding shoe relative to the rail guide, for instance to prevent braking or even clamping of the sliding shoe relative to the rail guide.

For the sake of a safe transport of objects over sea it can be advantageous to provide an embodiment of the device in which the hydraulic and/or pneumatic connection is incorporated in a hydraulic and/or pneumatic circuit which is configured such that it can fix a sliding shoe on the rail guide.

An example of a hydraulic circuit comprising both of the above stated embodiments is described in the figure description below.

In an embodiment the rail guide connected to the deck comprises a bull rail guide and a secondary rail guide, wherein the sliding shoes of the support structure slide over the secondary rail guide in the sliding direction during the displacement. The bull rail guide is configured to transmit the substantially vertical forces generated by support structures and objects received therein to the deck and other components of the vessel. The secondary rail guide is configured to displace at least one support structure in a plane running parallel to the deck with little risk of jamming. In addition, the secondary rail guide is configured to transmit the substantially transverse forces generated by support structures and objects received therein to the deck and other components of the vessel. The vertical forces caused during transport and upending of an object are likewise, at least partially, absorbed by the secondary rail guide.

A useful embodiment of the invention provides a device wherein the support structure comprises bull rail sliding shoes and these bull rail sliding shoes of the support structure slide over the bull rail guide with clearance during the displacement. Providing the clearance reduces the risk of the support structure becoming jammed on the bull rail guide.

In an embodiment a suitable clearance in a direction perpendicularly of the sliding direction amounts to between 1 and 10 cm, more preferably between 2 and 6 cm, still more preferably between 3 and 5 cm.

For the sake of efficient use of the (limited) space on a deck of a vessel the elongate objects are preferably stored on the deck in a space-saving manner. A suitable storage manner relates to support structures which run parallel to each other and in which an object is in each case received, this such that a longitudinal direction of the object runs parallel to the longitudinal direction of the support structure in which it is received. In an embodiment of the invention the displacing means are configured to displace the object in a direction running substantially perpendicularly of the longitudinal direction of the support structures. This makes it possible to displace an object transversely of the longitudinal direction of the support structures, whereby the mutual parallelism of the objects is preserved. According to an embodiment, the longitudinal direction of a support structure is defined by the line connecting the two support parts disposed at a mutual distance.

Another embodiment of the invention is characterized in that the displacing means are configured to displace a number of coupled support structures relative to the deck and parallel to the deck, in the direction of the lifting means. If desired, the support structure can comprise an upending tool, for instance in the form of a structure, mounted on an edge of the vessel for rotation around a horizontal axis, which comprises at least one support part, preferably two or more support parts, wherein at least one and preferably two or more peripheral parts lying at a mutual distance in the longitudinal direction of the object can be received. Such an upending tool is configured to support an object received in the relevant support structure in the longitudinal direction when it is suspended from the lifting means during upending. In an embodiment this can be achieved in that the upending tool comprises a bracket part which engages on a lower outer end of an object upended in the lifting means. If desired, the bracket part can comprise telescopically extendable side arms which enable adjustment of the longitudinal distance between the lower outer end and a peripheral part of the object engaged by the upending tool, which provides the option of receiving objects with different dimensions. The upending tool can optionally also comprise a clamping part with which a peripheral part of an object received therein can be received in clamping manner.

The device can comprise a plurality of support structures, disposed adjacently of each other or as a stack of support structures. The support parts of a support structure are here situated above support parts of another support structure in the stack. An overlying support part can here preferably be removed or folded away in order to allow an object to be given access to an underlying support part and to be arranged in the underlying support part. A support structure (or plurality of support structures) can also be provided with rotatable support parts.

The number of support structures in a device according to the invention can in principle be chosen freely and preferably amounts to at least 3, more preferably at least 4, still more preferably at least 5 support structures, and most preferably at least 8 support structures. The support parts of the support structures are configured to each support an elongate object, for instance during transport over sea, and some support structures have an additional function, such as the support structure comprising the rotatable support parts and the support structure comprising the upending tool. With the device according to the invention a relatively large number of objects can be transported. It is thus possible to transport at least 5 objects, more preferably at least 10, still more preferably at least 20, and most preferably at least 30 objects. The dimensions of the objects can play a part here. The number of pin piles to be transported (for instance 25-30) will thus for instance generally be greater than the number of monopiles to be transported (for instance 8-10).

The support structures are preferably mutually coupled. The coupling of the support structures can be performed in any manner known to the skilled person. In an embodiment the device according to the invention can for instance be embodied such that the support structures are mutually coupled by coupling of their support parts. The space on the deck of the vessel can be utilized optimally, for instance in an embodiment in which the support parts of the support structures connected to the deck - and preferably coupled to each other - extend along a line running substantially parallel to a side edge of the vessel. In such an embodiment the rail guide likewise extends substantially parallel to a side edge of the vessel. In order to be able to utilize the maximal space in the athwartship direction an embodiment of the device is characterized in that the support parts comprise support parts disposed on port side and on starboard side. The objects received in the support parts of the support structures then extend in an athwartship direction, wherein it is possible that outer ends of objects even extended beyond the athwartship width of the vessel.

With the invented device an object to be lifted by a lifting means can be moved within reach of the lifting means provided on the deck of a floating device. In an embodiment of the device a lifting means for taking up an object is for this purpose provided, wherein the displacing means are further configured to displace the object in the direction of the lifting means.

In a suitable method a number of elongate objects is supported in lying position on the deck by a number of elongate support structures which run parallel to each other and each comprise two support parts, placed at a mutual distance in a longitudinal direction of the support structure and connected to the deck, for peripheral parts of an object, wherein an object to be lifted is displaced relative to the deck and parallel to the deck in the lying position.

With the invented device an elongate object, such as for instance a monopile of a wind turbine, can be supported on a deck of a vessel and be upended with a lifting means more efficiently than is the case with the known device, inter alia by providing means for moving the elongate object within reach of the lifting means. The invention provides for this purpose a method for supporting an elongate object in lying position on a deck of a vessel, comprising the steps of receiving the object in lying position in a support structure and displacing the support structure in a plane running parallel to the deck by having sliding shoes of the support structure slide over a rail guide connected to the deck in a sliding direction, wherein sliding shoe parts extend on either side of the rail guide and wherein each sliding shoe part is connected with interposing of a hydraulic and/or pneumatic connection to the support structure in a direction running perpendicularly of the sliding direction.

Lifting of an object with the lifting means can for instance be done by fastening an engaging means such as a hoist to an upper outer end of the object and then pulling the engaging means upward with the lifting means. At least the upper outer end of the lying object is hereby moved upward, whereby the object will rotate around a support part on which it supports until the object becomes completely detached, also from this support part.

In suitable embodiments of the invented method the support structures are displaced collectively in a direction running substantially perpendicularly of the longitudinal direction of the support structures, wherein the support structures are preferably displaced in the direction of the lifting means in order to move support structures with rotatable support parts and/or support structures with the upending tool and/or stacked support structures within reach of the lifting means.

The elongate objects can for instance comprise hollow tubular objects. The dimensions of the objects are in principle not limited to the specific dimensions, and the advantages of the invention are most clearly manifest in elongate objects with a length amounting to more than 50 m, preferably more than 70 m, still more preferably more than 80 m; and with a transverse dimension, for instance a diameter in the case of a tubular object, amounting to more than 8 m, more preferably more than 10 m, and still more preferably more than 12 m.

Another aspect of the invention relates to a vessel comprising a device according to the invention. The vessel can comprise any vessel suitable for the intended object. It is thus possible for the vessel to comprise a jack-up platform which is immobilized on site by having it support on the underwater bottom. It is also possible for the vessel to comprise a floating vessel. The vessel can be provided with a global positioning system (GPS), and with compensating means which counter movements of the vessel as a result of wave movements and the like.

The embodiments of the invention described in this patent application can be combined in any possible combination of these embodiments. Each embodiment can furthermore individually form the subject-matter of a divisional patent application.

### BRIEF DESCRIPTION OF THE FIGURES

The invention will now be elucidated in more detail with reference to the accompanying figures, without otherwise being limited thereto. In the figures:
Fig. 1 is a schematic perspective view of a jack-up platform provided with a support structure for lying support of monopiles, and of a lifting means with which a monopile can be taken up;
Fig. 2A is a schematic front view of a device according to an embodiment of the invention in a first position;
Fig. 2B is a schematic front view of a device according to an embodiment of the invention in a second position;
Fig. 3 is a schematic perspective view of a device according to another embodiment of the invention and provided with a number of monopiles;
Fig. 4A is a schematic perspective view of a port side structure according to an embodiment of the invention;
Fig. 4B is a schematic perspective view of a starboard side structure according to an embodiment of the invention;
Fig. 5 is a schematic front view of the stem of the vessel of a device according to yet another embodiment of the invention;
Fig. 6 is a schematic perspective detail view of a rotatable support part according to an embodiment of the invention;
Fig. 7 is a schematic perspective view of a displacing means according to an embodiment of the invention;
Fig. 8 is a schematic perspective view of a hydraulic connection of a displacing means according to an embodiment of the invention;
Fig. 9 is a schematic perspective detail view of the hydraulic connection according to an embodiment of the invention shown in figure 8;
Fig. 10 is a schematic side view of the hydraulic connection according to an embodiment of the invention shown in figure 9;
Fig. 11 is a schematic representation of a hydraulic circuit in which the hydraulic connection according to an embodiment of the invention is incorporated;
Fig. 12 is a detail of the schematic representation of the hydraulic circuit of figure 11;
Fig. 13A is a detail of the schematic representation of the hydraulic circuit of figure 11 in which it is configured such that a sliding shoe can co-displace with the rail guide under counter-pressure; and, finally
Fig. 13B is a detail of the schematic representation of the hydraulic circuit of figure 11 in which it is configured such that it fixes a sliding shoe on the rail guide.

### DETAILED DESCRIPTION OF EXEMPLARY EMBODIMENTS

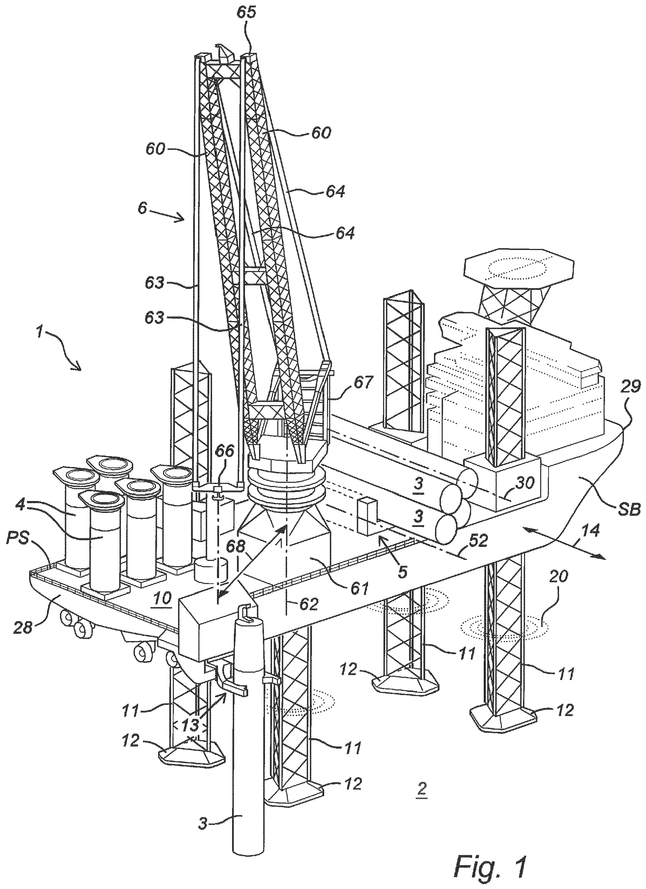

Referring to figure 1, an installation jack-up platform 1 is shown for placing a monopile 3 on a seabed 2. Platform 1 is likewise suitable for placing other elongate objects, such as the transition pieces 4 of a wind turbine mast stored on deck 10. Such a transition piece 4 is arranged on a monopile 3 arranged in seabed 2 as transition to a wind turbine mast (not shown). Jack-up platform 1 with stern 28 and stem 29 can navigate independently and is fixed at a desired position at the destination by lowering of a number of spud poles 11 onto seabed 2. Deck 10 of platform 1 is here lifted from the water so that it comes to lie metres above the water surface 20. Spud poles 11 can be provided with spud cans 12 for preventing spud poles 11 from sinking further into seabed 2.

Components to be placed, for instance a number of monopiles 3, are provided on deck 10 of platform 1. Monopiles 3 are received in a device 5, embodiments of which will be further elucidated below. Monopiles 3 can have considerable dimensions, with lengths of for instance 80 m and diameters of 8 m and more.

Deck 10 of jack-up platform 1 is provided with a lifting means 6 with double boom 60 for taking up the monopiles 3. Lifting means 6 is situated at the position of stern 28 of platform 1 and is rotatable around a base 61, around a substantially vertical axis 62, and further provided with hoisting cables 63 which can be taken in or payed out over a top part 65 of lifting means 6 with winches (not shown) and which are connected at a free outer end to a hoisting block 66 with hook, by which a monopile 3 or other object can be taken up, if desired with interposing of a hoisting yoke with hoisting slings. The angular position of boom 60 can be adjusted by a set of traction cables 64 which connect top part 65 to a support 67 provided on base 61. Traction cables 64 can be taken in or payed out using winches (not shown). When taken in, boom 60 is luffed in, while boom 60 is lowered when traction cables 64 are payed out. The reach of lifting means 6 is given for a load with a determined weight by the minimum and maximum possible horizontal distance 68 between central axis 62 of base 61 and the position of hoisting yoke 66 in which hoisting means 6 is still just stable with this load.

For the sake of completeness, deck 10 of platform 1 can also be provided with a gripping construction 13 for a monopile 3 taken up from support structure 5 by lifting means 6. Gripping construction 13 is configured to engage a monopile 3 hanging from hoisting means 6 and to guide it during the lowering to seabed 2.

An embodiment of the invention relates to a device 5 for supporting a number of elongate monopiles 3 in lying position on deck 10 of jack-up platform 1 and upending a monopile 3 from deck 10 of platform 1, from device 5, using lifting means 6. In the lying position monopiles 3 extend substantially horizontally, in other words substantially parallel to deck 10.

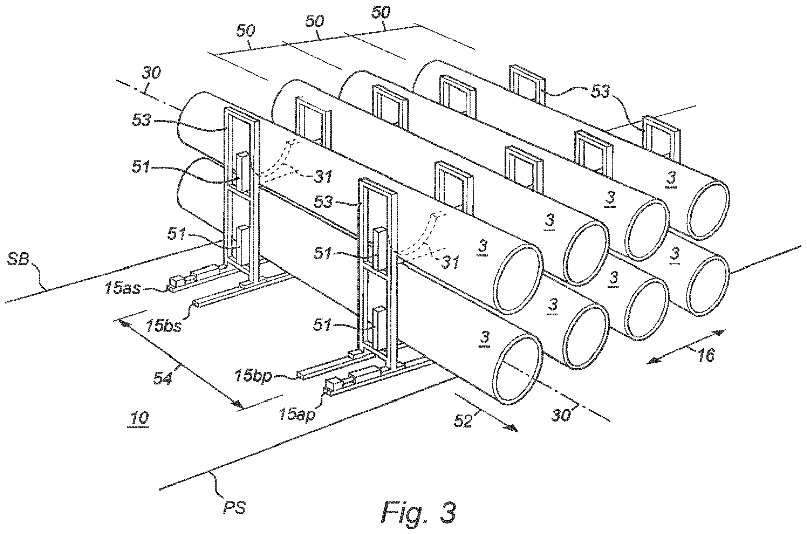

As can be seen clearly in figure 3, a longitudinal direction 30 of monopile 3 runs substantially parallel to the longitudinal direction 52 of support structure 50 in which monopile 3 is received. In the shown embodiments each support structure 50 comprises two support parts 51, placed at mutual distance 54 in the longitudinal direction 52 of support structure 50, although the invention is not limited thereto. A support structure 50 can thus comprise only one support part 51, or conversely more than two. It is also possible to provide a support part 51 running continuously over the distance 54. Each support part 51 has a support surface shaped substantially like a peripheral part 31 of a monopile 3 received or to be received therein. In the shown embodiment each support structure 50 comprises two support parts 51 placed at distance 54, wherein a first series of mutually coupled support parts 51 extends substantially along a line which runs parallel to a starboard side SB of platform 1, and a second series of mutually coupled support parts 51 extends substantially along a line which runs parallel to a port side PS of platform 1. The support parts are displaceable along a bull rail 15as which is connected on the starboard side SB to deck 10, and a bull rail 15ap which is connected to deck 10 on the port side PS, and along secondary rail guides 15bp and 15bs which run parallel to bull rails 15ap and 15as.

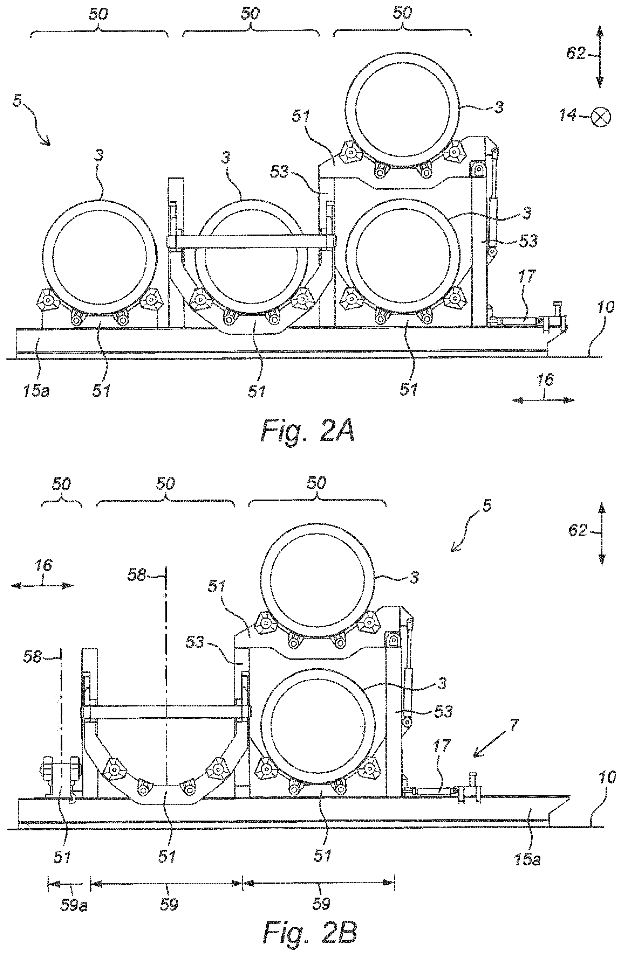

The side views of an embodiment of device 5 shown in figures 2A and 2B comprise a number of elongate support structures 50 which run parallel to each other along an athwartship direction 14 and which comprise mutually coupled support parts 51 placed at a distance from each other. Support parts 51 are (directly or indirectly) connected to deck 10, for instance via the rail connection 15 shown in figures 2A and 2B, of which only a so-called bull rail 15a of platform 1 is visible in the side view.

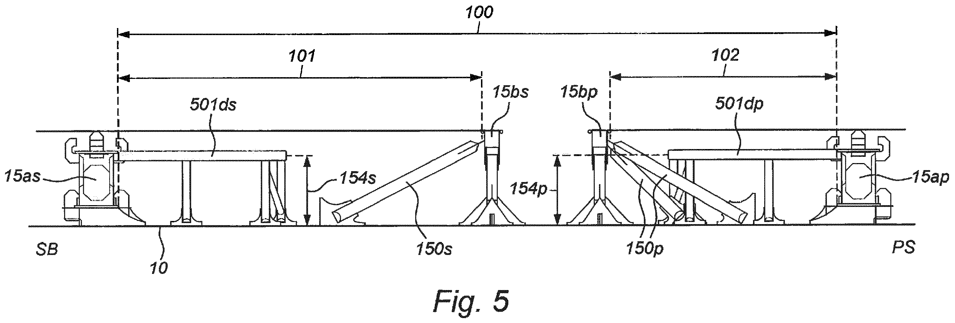

Also referring to figure 5 (not all component are included in this figure), the secondary rail guides 15bp and 15bs are connected fixedly to deck 10 of the platform with transverse connections 150p and 150s. Bull rail guides 15as and 15ap are further connected to rotation rail guides 501ds and 501dp connected to deck 10 at a height (154p, 154s). Uprights 53p and 53s and other parts of the support structures (50a, 50b, 50c, 50d) are connected slidably to the secondary rail guides 15bp and 15bs by means of connecting rods 151p and 151s. Connecting rods 151p and 151s are for this purpose provided at an outer end with secondary sliding shoes 152p and 152s which can slide over the secondary rail guides 15bp and 15bs. Bull rail guides 15ap and 15as transmit substantially vertical forces to deck 10 of platform 1, while the secondary rail guides 15bp and 15bs are substantially configured to, together with bull rail guides 15ap and 15as, absorb transverse forces and transmit them to deck 10. According to figure 5, the spanned width 101 of the support structures on starboard side SB is greater than the spanned width 102 of the support structures on port side PS. This greater width 101 is necessary to be able to absorb the torques which are generated by the upending tool 8 disposed on starboard side SB during upending of a monopile 3. The distance 100 corresponds substantially to the athwartship width.

A support structure 50 comprises a support part 51 which has a rounded U-shape in cross-section. The side arms of the U-shape provide for a horizontal stabilization of a monopile 3 received therein, while a bottom surface of each support part 51 provides for a vertical stabilization of a monopile 3 received therein. Support parts 51 are received between vertically oriented uprights 53, which transmit the forces caused in support parts 51 by monopiles 3 to rail guide 15 and on to the deck 10 of jack-up platform 1.

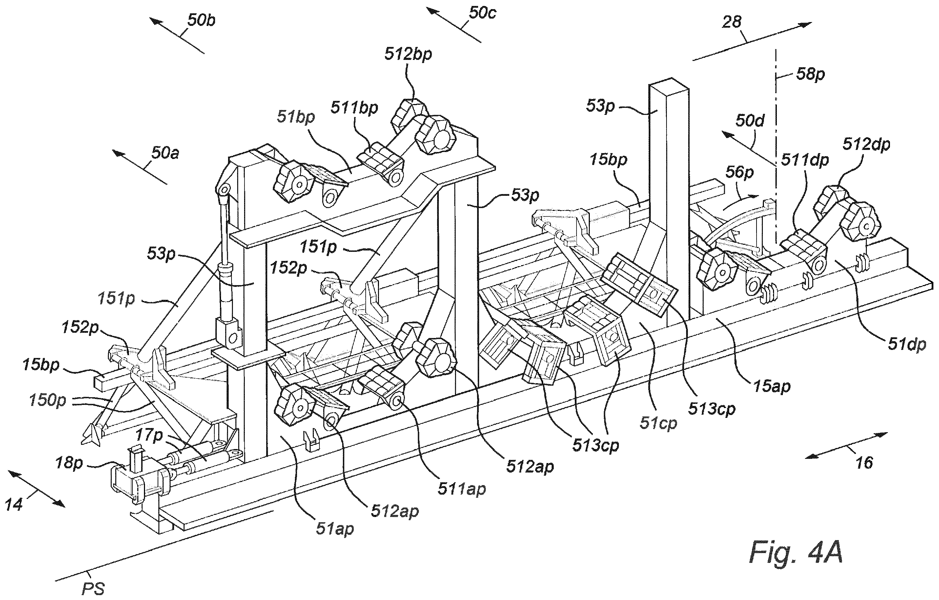

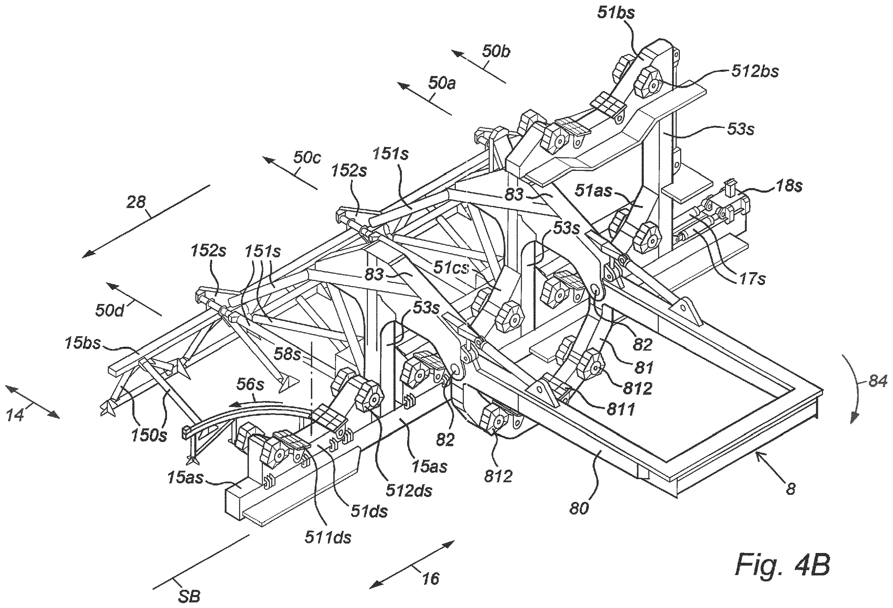

An embodiment of the device shown in figures 4A and 4B relates to mutually coupled support parts (51ap, 51bp, 51cp, 51dp) provided on the port side PS of platform 1 (figure 4A) and mutually coupled support parts (51as, 51bs, 51cs, 51ds) provided on the starboard side SB of platform 1 (figure 4B).

A support part (51ap, 51bp, 51cp, 51dp) on port side and a corresponding support part (51as, 51bs, 51cs, 51ds) on starboard side together form an elongate support structure (50a, 50b, 50c and 50d) running along an athwartship direction 14. Each support structure (50a, 50b, 50c and 50d) is connected (directly or indirectly) via the respective support parts (51ap, 51bp, 51cp, 51dp) and (51as, 51bs, 51cs, 51ds) to deck 10. In the shown embodiment this connection comprises a rail connection 15.

Each support part 51 has a rounded U-shape in cross-section. The side arms of the U-shape provide for a horizontal stabilization of a monopile 3 received therein, while a bottom surface of each support part 51 provides for a vertical stabilization of a monopile 3 received therein. Support parts 51 are received between vertically oriented uprights 53 (53p on port side, 53s on starboard side) which transmit the forces caused in support parts 51 by monopiles 3 to the rail guide (15a, 15b) and on to the deck 10 of jack-up platform 1. Each support part 51 has a support surface shaped substantially like a peripheral part 31 of a monopile 3 received or to be received therein. The support surfaces are formed by saddles 511 (511ap, 511bp, 511dp, 511as, 511bs, 511ds), a number of saddles 512 (512ap, 512bp, 512dp, 512as, 512bs, 512ds) of which is embodied for rotation around a horizontal axis. This has the advantage that monopiles 3 with different diameters can be received in saddles 512. The middle support part 51cp is provided on port side PS with saddles 513cp adjustable in the height or other directions.

According to figure 4B, the middle support structure 50c is provided with an upending tool 8 which is connected for pivoting around an axis running parallel to a starboard edge SB of platform 1 to the relevant support structure 50c, or at least to support arms 83 which are connected to the vertical upright 53s of the relevant support structure 50c, by means of hinge connections 82. Upending tool 8 comprises one support part 81 which is embodied in the same way as the other support parts 51, and in which a peripheral part of a monopile 3 can be received. Support part 81 thus has a support surface which is shaped substantially like a peripheral part 31 of a monopile 3 received or to be received therein. The support surfaces are formed by saddles 811, a number of saddles 812 of which is embodied for rotation around a horizontal axis. Upending tool 8 further comprises a bracket part 80 which engages in use on a lower outer end of a monopile 3 upended in the lifting means. If desired, bracket part 80 can comprise telescopically extendable side arms which enable adjustment of the longitudinal distance between the lower outer end and a peripheral part of a monopile 3 engaged by the upending tool 8, which provides the option of receiving monopiles 3 with different dimensions. Upending tool 8 can optionally also comprise a clamping part (not shown) with which a peripheral part of a monopile 3 received therein can be received in clamping manner. According to an embodiment of the invention, upending tool 8 is configured to support a monopile 3 received in the relevant support structure 50c in the longitudinal direction 30 when this monopile 3 is suspended from lifting means 6 and is being upended by lifting means 6. Upending tool 8 is here rotated in the direction 84 around the axis of the pivot connection 82 until the plane of bracket part 80 runs substantially parallel to the vertical direction.

In this embodiment displacing means 7 are configured to displace the support structures (50a, 50b, 50c, 50d) collectively relative to deck 10 and parallel to deck 10 over the rail guides (15ap, 51bp, 51as, 51bs). This is achieved by displacing the support parts (51ap, 51bp, 51cp, 51dp) on port side and the corresponding support parts (51as, 51bs, 51cs, 51ds) on starboard side simultaneously over the rail guides (15ap, 15bp) on port side and the rail guides (15as, 15bs) on starboard side. Monopiles 3 received in the support structures are here likewise translated relative to deck 10.

The displacing means comprise the bull rail guides 15ap and 15as connected to deck 10 on starboard side and the secondary rail guides 15bp and 15bs on port side, and further a number of hydraulic piston cylinders 17p and 17s which are connected to a hydraulic circuit (not shown).

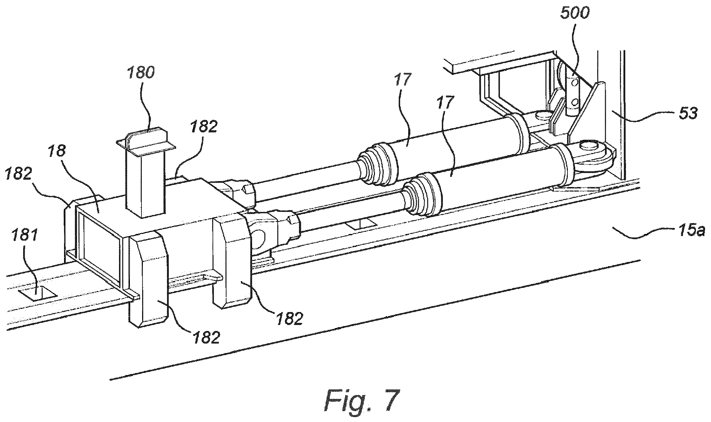

Referring to figure 7, piston cylinders 17 are fixedly connected on a cylinder side to a support structure 50, or at least a support part 51 or an upright 53 thereof, and on a piston side to a slide block 18. Upright 53 (or another component of support structure 50) can be fixed to bull rail guide 15a using a fixing pin 500. Slide block 18 can be fixedly connected to the bull rail guide 15a using a pin 180 by arranging pin 180 in a fixing opening 181 arranged in bull rail guide 15a for coupling. By extending or conversely retracting the cylinder piston, a support structure 50 can be moved over the bull rail guide 15a in the direction of the stern 28 of platform 1, or in the direction of lifting crane 6. The collective displacement of the support structures (50a, 50b, 50c, 50d) and more specifically of the support parts (51ap, 51bp, 51cp, 51dp) on port side and the corresponding support parts (51as, 51bs, 51cs, 51ds) on starboard side can be performed as follows. Firstly, fixing pins 500 (500p on port side and 500s on starboard side) are retracted so that support structures 50 become detached from the bull rail guides 15ap and 15as. Piston cylinders 17p and 17s are then extended so that support structures 50 slide over the bull rail guides 15p and 15s and are displaced. Slide blocks 18p and 18s are here fixedly connected to bull rail guide 15a using pins 180p and 180s. During displacement of support structures 50 the pins 180p and 180s transmit the horizontal forces from slide blocks 18p and 18s to an upper flange of bull rail guides 15ap and 15as. Vertical forces are absorbed by side clamps 182p and 182s which are provided on slide blocks 18p and 18s and which engage around the upper flange of bull rail guide 15a. Fixing pins 500p and 500s are then pressed out so that support structures 50 are fixed on the bull rail guides 15ap and 15as. Piston cylinders 17p and 17s are then retracted again, whereby slide blocks 18p and 18s slide over the bull rail guides 15p and 15s and are displaced in the direction of support structures 50. Finally, slide blocks 18p and 18s are fixedly connected to bull rail guide 15a using pins 180p and 180s by arranging the pins 180p and 180s in the fixing openings 181 arranged in the bull rail guides 15ap and 15as. The above described displacing process can be repeated a number of times.

In figures 4A and 4B cylinder pistons 17p and 17s are in retracted position, wherein the support structures 50p and 50s are in a position which is as far removed as possible from the stern 28 of platform 1 or, alternatively, is as far removed as possible from lifting means 6. By extending piston cylinders 17p a number of times, as described above, the support parts (51ap, 51bp, 51cp, 51dp) are, with reference to figure 4A, shifted to the right in the direction of the stern 28 and the lifting means 6 (not shown). By simultaneously extending piston cylinders 17s a number of times, as described above, the support parts (51as, 51bs, 51cs, 51ds) are, with reference to figure 4B, shifted to the left in the direction of the stern 28 and the lifting means 6 (not shown).

In order to free up space on the side of the support structures (50a, 50b, 50c, 50d) situated closest to lifting means 6 (or stern 28) the support parts 51dp and 51ds are in this embodiment rotatable in the directions of the arrows 56p and 56s around vertical axes 58p and 58s. The support parts 51dp and 51ds which have been rotated away thus take up less space in the direction of movement 16, whereby a subsequent support structure 50, in this case the support structures 51cp and 51cs, and the upending tool 8, can be moved closer to lifting means 6 and within reach thereof. Rotation around axes 58p and 58s reduces the occupied width 59 of the support parts 51dp and 51ds lying closest to lifting means 6 in the direction of movement 16 to a smaller occupied width 59a (see figure 2B).

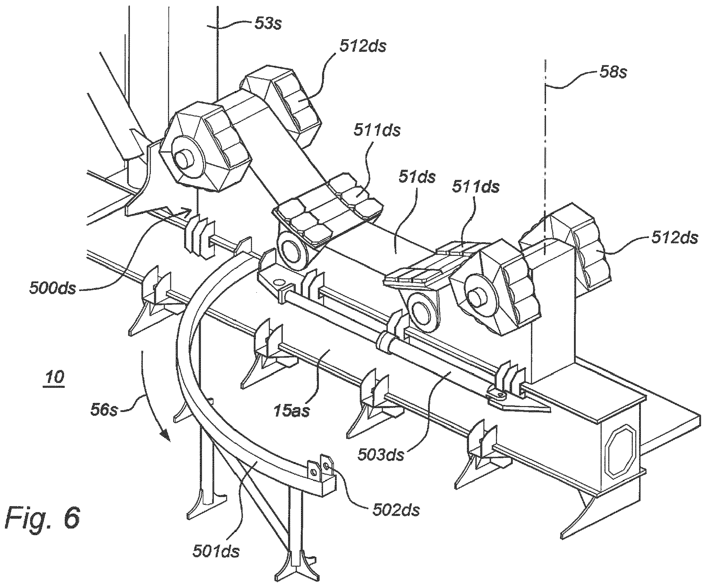

Figure 6 shows a detail view of a rotatable support part 51ds. Support part 51ds is fixed on the bull rail guide 15as by means of a pin connection 500ds. By uncoupling this pin connection 500ds the support part 51ds can be rotated around a vertical axis 58s in the direction 56s. Support part 51s supports here on a rotation rail guide 501ds which is connected to deck 10. In the position in which support part 51ds has been rotated away it is fixed on the rotation rail guide 501ds using a pin connection 502ds. The rotation is activated by a piston cylinder 503ds which is connected with a cylinder part fixedly to deck 10, and on a piston side to support part 51ds. By retracting the piston the support part 51ds will rotate in the direction 56s. When the piston extends, support part 51ds is rotated in the direction of the bull rail guide 15as again until it runs parallel thereto.

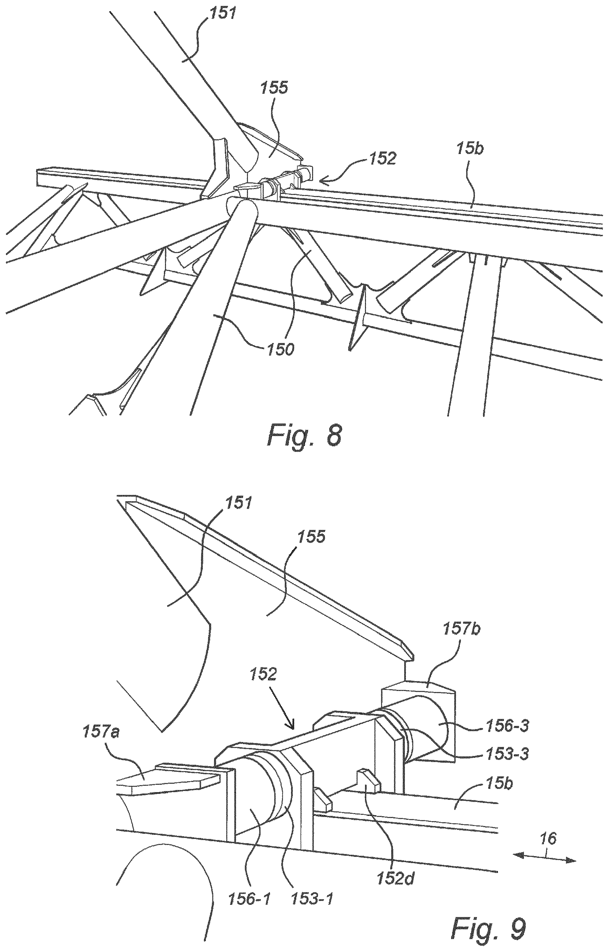

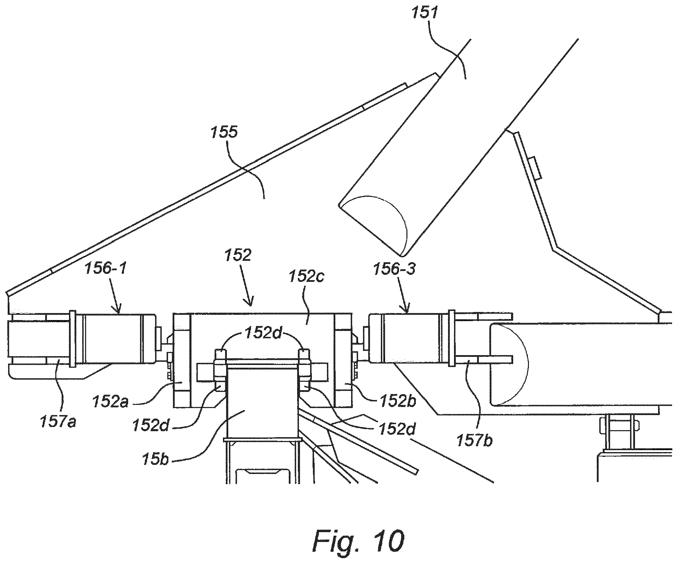

Referring to figures 8-13B, an embodiment of the device is shown wherein the displacing means comprise a secondary rail guide 15b which is connected to deck 10 and which is held at a distance 154 from deck 10 by rods 150. A connecting rod 151 is provided at an outer end via a web plate 155 (which is supported by connecting rod 151 and rods 150) with a secondary sliding shoe 152 which can slide over the secondary rail guide 15b. As indicated in figures 9 and 10, a sliding shoe 152 comprises two sliding shoe parts (152a, 152b) which extend on either side of rail guide 15b and which are connected to a central sliding shoe part 152c. Each sliding shoe part is connected with interposing of a hydraulic connection in the form of a piston cylinder 156 (156-1, 156-3) via web plate 155 and connecting rod 151 to support structure 50 in a direction running perpendicularly of sliding direction 16. Each cylinder 156 is arranged for this purpose on a U-shaped profile 157 which is welded onto web plate 155. Protrusions 152d welded onto the central sliding shoe part 152c comprise an upper edge of rail guide 15b on either side and thereby hold sliding shoe 152 on rail guide 15b. Of the piston cylinders (156-1, 156-3), a first one 156-1 is connected on a side to support structure 50 and on another side to a first sliding shoe part 152a of sliding shoe 152, while a second piston cylinder 156-3 is connected on a side to support structure 50 and on another side to second sliding shoe part 152b of sliding shoe 152. Second sliding shoe part 152b is here situated on a different side of rail guide 15b than the first sliding shoe part 152a.

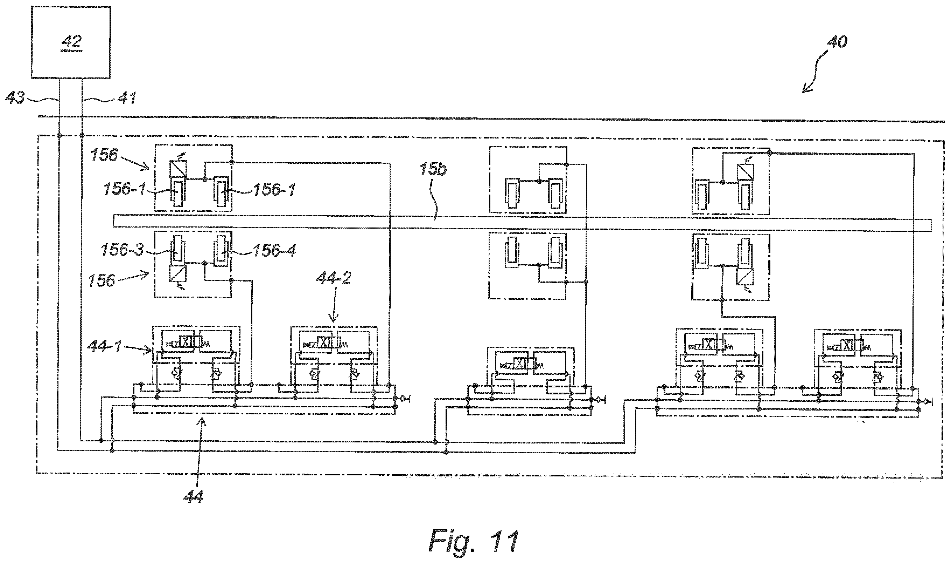

The hydraulic connection (152, 156) between support structure 50 and secondary rail guide 15b is incorporated in a hydraulic circuit 40 which is shown schematically in figure 11. Hydraulic circuit 40 is fed via a hydraulic supply conduit 41 which can be pressurized by a hydraulic generator or powerpack 42. Oil present in hydraulic circuit 40 can flow via return conduit 43 back to generator 42.

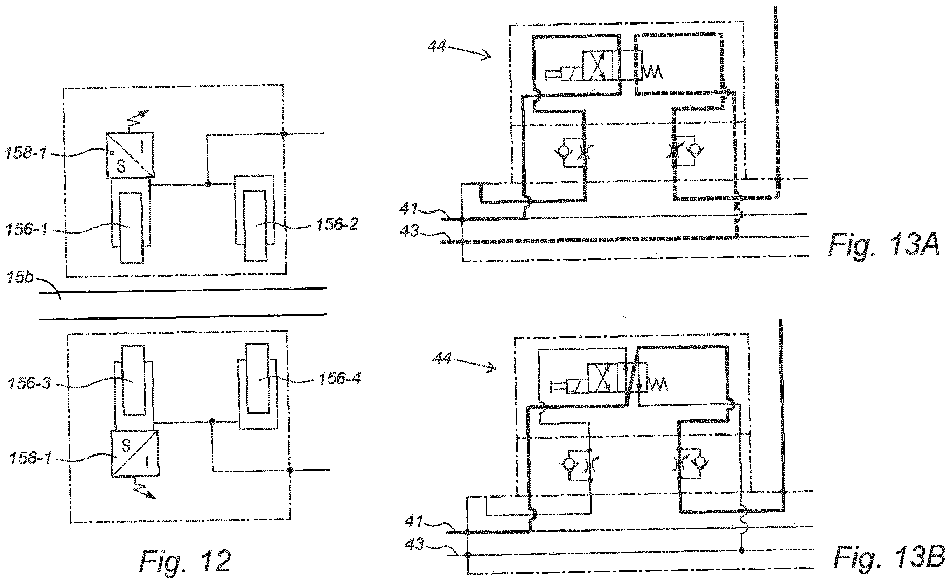

The positioning and the guiding of support structures 50 is achieved using a total of 12 piston cylinders 156 which engage on a secondary rail guide 15bs connected to the deck on starboard and 12 piston cylinders 156 which engage on a secondary rail guide 15bp connected to the deck on port. Figure 11 does not distinguish between a port and a starboard rail guide 15b. In the shown embodiment each hydraulic connection comprises 4 hydraulic piston cylinders 156, two of which (156-1, 156-2) are disposed on one side of rail guide 15b and two others of which (156-3, 156-4) are disposed on the other side of rail guide 15b (see also figure 12). If desired, piston cylinders 156-1 and 156-3 can be provided with a length readout 158 (158-1, 158-3) of the plunger of the relevant piston cylinder 156. It is noted that such a length readout is provided in the hydraulic connections present on both outer ends of the rail guide (see figure 11). Length readouts 158 on both outer ends of rail guide 15b allow information regarding the way in which support structures 50 are positioned on secondary rail guides 15b and bull rail guides 15a to be obtained. This information can then be used to reposition support structures 50 correctly on rail guides 15 in the case of a possible misaligned arrangement relative to rail guides 15.

In the shown embodiment the control of piston cylinders 156 is controlled by a number of manifolds 44. The two outer hydraulic connections can here each be controlled by two manifolds, while a middle hydraulic connection is controlled by only one manifold. The two manifolds 44 here control the piston cylinders 156 on one side of rail guide 15b. Manifold 44-1 thus controls piston cylinders 156-3 and 156-4, while manifold 44-2 controls piston cylinders 156-1 and 156-2. This embodiment has the advantage that when support structure 50 is positioned badly on rail guide 15, piston cylinders 156 of the two outer hydraulic connections need be powered on only one side of guide rail 15b.

Referring to figure 13, the operation of manifolds 44 is elucidated. In a non-powered state shown in figure 13A no oil is carried under pressure via supply conduit 41 to the cylinder side of piston cylinders 156. In this situation a piston cylinder 156 can move in and out freely, wherein oil is carried back via return conduit 43 toward generator 42. In this position of manifolds 44 each sliding shoe 152 follows rail guide 15b with counter-pressure. In a powered position shown in figure 13B oil is carried under pressure via supply conduit 41 to the cylinder side of piston cylinders 156. In this situation the plunger of a piston cylinder 156 is pressed against a wall part 152b of a sliding shoe 152 with relatively great pressure, whereby the relevant sliding shoe 152 is fixed on rail guide 15b. After such a hydraulic fixing the sliding shoes 152 are also mechanically secured for the purpose of transport. This can for instance be done by screwing clamping rings 153 (153-1, 153-2, 153-3,...) with screw thread, provided on piston cylinders 156 (156-1, 156-2, 156-3,...), against the cylinder housing, whereby the piston of the relevant piston cylinder 156 is fixed. For the purpose of the clamping the piston is likewise provided with screw thread, which co-acts with the screw thread of clamping rings 153. This preferably applies to all sliding shoes 152. This situation is for instance appropriate during the transport of monopiles 3 received in support structures 50. It is further also noted that it may be useful for releasing of sliding shoes 152 (and of clamping rings 153) to bring the hydraulic pressure on the pistons of piston cylinders 56 above the operating pressure.

In order to prevent support structures 50 from becoming stuck on bull rail guide 15a sliding shoes which engage on the bull rail 15a take a spacious form such that they can slide with clearance over bull rail guide 15a during displacement of support structures 50.

The invention is not limited to the above described exemplary embodiments, and many variants thereof are possible within the scope of protection of the appended claims.

## Claims

1. Device for supporting an elongate object on a deck of a vessel, comprising a support structure in which the object can be received in lying position and displacing means configured to displace the support structure in a plane running parallel to the deck, wherein the displacing means comprise a rail guide which is connected to the deck and over which sliding shoes of the support structure slide in a sliding direction, wherein sliding shoe parts extend on either side of the rail guide and wherein each sliding shoe part is connected with interposing of a hydraulic and/or pneumatic connection to the support structure in a direction running perpendicularly of the sliding direction, in a plane running parallel to the work deck.

2. Device according to claim 1, wherein the connection between a sliding shoe and the support structure comprises a hydraulic connection.

3. Device according to claim 1 or 2, wherein the connection between a sliding shoe and the support structure comprises a piston cylinder which is connected on a side to the support structure and on another side to the sliding shoe parts of the sliding shoe.

4. Device according to claim 3, wherein the connection between a sliding shoe and the support structure comprises two piston cylinders, a first of which is connected on a side to the support structure and on another side to a first sliding shoe part of the sliding shoe, and the second of which is connected on a side to the support structure and on another side to a second sliding shoe part of the sliding shoe, which second sliding shoe part is located on a different side of the rail guide than the first sliding shoe part.

5. Device according to any one of the foregoing claims, wherein the hydraulic and/or pneumatic connection is incorporated in a hydraulic and/or pneumatic circuit, which is configured such that it can have a sliding shoe co-displace with the rail guide under counter-pressure.

6. Device according to any one of the foregoing claims, wherein the hydraulic and/or pneumatic connection is incorporated in a hydraulic and/or pneumatic circuit which is configured such that it can fix a sliding shoe on the rail guide.

7. Device according to any one of the foregoing claims, wherein the rail guide comprises a bull rail guide and a secondary rail guide and the sliding shoes of the support structure slide over the secondary rail guide in the sliding direction during the displacement.

8. Device according to claim 7, wherein bull rail sliding shoes of the support structure slide over the bull rail guide with clearance during the displacement.

9. Device according to any one of the foregoing claims, comprising a number of elongate support structures which run parallel to each other and which each comprise two support parts for peripheral parts of an object which are placed at a mutual distance in a longitudinal direction of each support structure and are connected by means of a rail guide to the deck, and wherein the displacing means are configured to displace a number of coupled support parts of support structures collectively.

10. Device according to any one of the foregoing claims, further comprising a lifting means for taking up an object, wherein the displacing means are configured to displace the object received in a support structure in the direction of the lifting means.

11. Method for supporting an elongate object in lying position on a deck of a vessel, comprising the steps of receiving the object in lying position in a support structure and displacing the support structure in a plane running parallel to the deck by having sliding shoes of the support structure slide over a rail guide connected to the deck in a sliding direction, wherein sliding shoe parts extend on either side of the rail guide and wherein each sliding shoe part is connected with interposing of a hydraulic and/or pneumatic connection to the support structure in a direction running perpendicularly of the sliding direction.

12. Vessel comprising a device according to any one of the claims 1-10.
